# EUROPEAN PATENT SPECIFICATION

(11) **EP 2 696 115 B1**
(45) Date of publication and mention of the grant of the patent: **24.05.2017**
(21) Application number: 12768217.7
(22) Date of filing: 04.04.2012
(51) Int. Cl.: F16K 11/087, F16K 31/52, F16K 35/12, F16K 17/04, F16K 5/06, F16K 5/10, F16K 15/18

(54) **THREE-POSITION VALVE FOR WATER SUPPLY SYSTEMS**
DREISTELLUNGSVENTIL FÜR WASSERVERSORGUNGSSYSTEME
CLÉ À TROIS POSITIONS DESTINÉE À ADMINISTRER DE L'EAU

(30) Priority: 05.04.2011 ES 201100395 P
(43) Date of publication of application: 12.02.2014
(73) Proprietor: Alcaraz Sencianes, Rafael, 17006 Girona (ES); Lorenzo Felip, Jaime, 17006 Girona (ES)
(72) Inventor: Alcaraz Sencianes, Rafael, 17006 Girona (ES); Lorenzo Felip, Jaime, 17006 Girona (ES)
(74) Representative: Cabinet Plasseraud
(86) International application number: PCT/ES2012/000089
(87) International publication number: WO 2012/136865

(56) References cited:
- EP-A2- 0 473 463
- EP-A2- 1 681 520
- WO-A1-2011/135119
- DE-A1- 2 531 809
- DE-U1- 29 805 063
- ES-A1- 2 191 515
- ES-U- 276 693
- ES-U- 277 900
- FR-A1- 2 566 872
- GB-A- 988 505
- JP-A- 55 002 831
- JP-A- 2010 095 873
- US-A- 5 937 890
- US-A1- 2009 242 817

## Description

### Field of the Art

The present invention relates to the control of passage in water supply pipes, particularly in relation to the supply from water supply systems to consumers, proposing a ball type faucet allowing three functional positions corresponding to: an open passage arrangement, a closed passage arrangement and a reduced passage arrangement, for different circumstances that may arise in consumer water supply.

### State of the Art

There are different types of faucets on the market for closing and opening fluid pipes, such as those having a ball with a hole going through it, the communication or interruption of the passage between two pipes coupled to the faucet on both sides is determined by means of the rotation of said ball.

Conventional faucets of this type are efficient for closing and opening the passage in the pipes of application, but in specific services, such as water supply from a consumer water supply system, circumstances that may vary depending on the users arise, such that in addition to opening and closing, other arrangements may have to be established for partial supply according to the users' particularities.

To that end, supply pipe passage flow regulation through is required, however conventional faucets for closing and opening supply are not envisaged for said regulation, whereby flow regulation for intermediate passage conditions is roughly done by means of a partial rotation of the faucet between the closing and opening positions, according to the criterion of the operator performing the maneuver, such regulation being rather imprecise. FR2566872 discloses a faucet according to the preamble of claim 1. WO2011135119, published after the priority and before the filing of the present application, discloses a faucet having a ball with four conduits.

### Object of the Invention

The invention proposes a faucet, according to claim 1, for water supply pipes, of the type comprising a ball that can be rotated in order to determine different functional positions, according to an embodiment this proposed faucet being envisaged to allow establishing in precise positions an open passage arrangement, a closed passage arrangement and a reduced passage arrangement for a specific partial flow .

To that end, said faucet object of the invention comprises a rotary ball that can be rotated between three positions with 90° rotations between the different positions, said ball having a conduit which is open from a side area to the middle area, from where there is arranged in continuation another conduit opening perpendicularly downwards, whereas another conduit of a smaller diameter communicates with the first conduit from a perpendicular side position, the ball being provided in the upper portion with a slot in which a rod that can be rotated by means of a drive lever is coupled.

A functionally advantageous faucet with which three positions that allow covering various possibilities that may be required in consumer water supply service is thus obtained.

Particularly, the faucet allows establishing, under those conditions, an open passage arrangement in which the flow reaching the faucet completely passes through it; a closed passage arrangement in which the circulation passing through the faucet is completely interrupted; and a reduced passage arrangement with which a partial supply can be provided, for example in water restriction periods, or a water supply with minimum flow can be provided in special situations.

Based on the foregoing, said faucet object of the invention has particularly advantageous features for application in consumer water supply systems, acquiring its own identity and preferred character for said function.

### Description of the Drawings

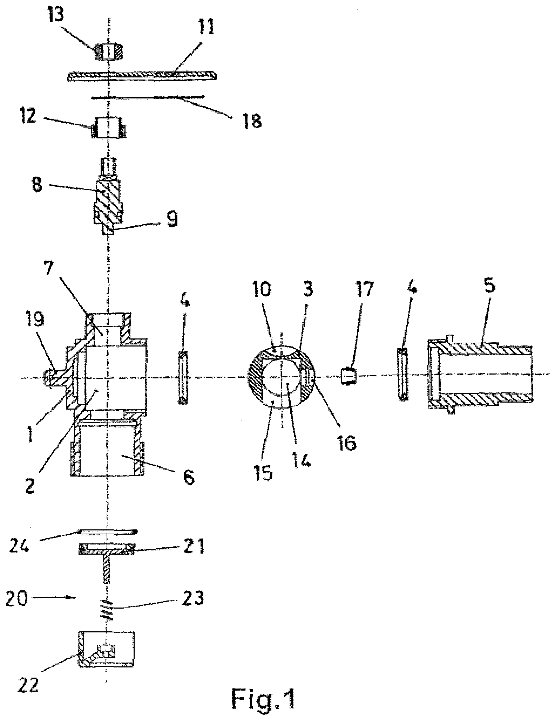

Figure 1 shows an exploded and sectioned view of the assembly of a faucet for water passage formed according to the invention.

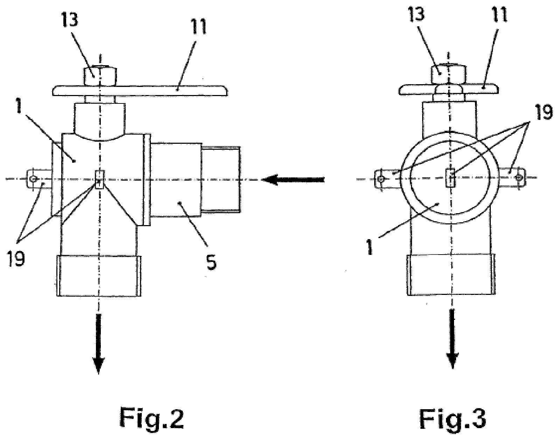

Figure 2 is a side view of the faucet of the preceding figure assembled.
Figure 3 is a corresponding profile view with respect to the preceding figure.

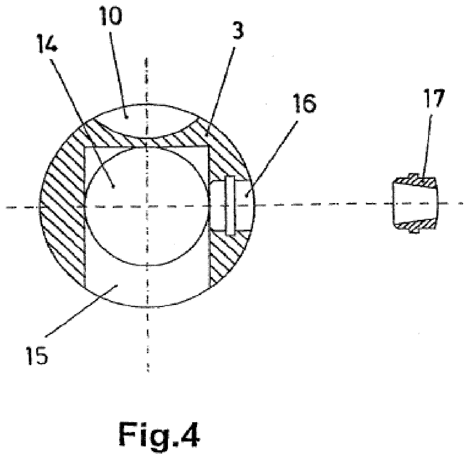

Figure 4 is a sectioned view of the ball of a faucet according to the invention, with a bushing determining the reduced passage in the exploded position with respect to the assembly in said ball.
Figure 5 is a sectioned side view of the faucet of Figures 1 to 3 in the open passage position.
Figure 6 is a top plan view of the faucet in the position of the preceding figure.
Figure 7 is a sectioned side view of said faucet of Figures 1 to 3 in the closed passage position.
Figure 8 is a top plan view of the faucet in the position of the preceding figure.
Figure 9 is a sectioned side view of that faucet of Figures 1 to 3 in the reduced passage position.
Figure 10 is a top plan view of the faucet in the position of the preceding figure.
Figure 11 is a sectioned side view of an embodiment of the faucet object of the invention with a lower outlet bent in the horizontal direction.

### Detailed Description of the Invention

The object of the invention relates to a faucet for pipes supplying water from water supply systems to consumers, comprising a body (1) determining a housing (2) in which a ball (3) is arranged in a leak-tight assembly between gaskets (4), with closure by means of a laterally coupled tubular bushing (5), the body (1) determining in the lower portion an outlet conduit (6) communicating with the housing (2), whereas in the upper portion, it determines a conduit (7) through which there is inserted a rod (8) provided with an end formation (9) fitting into a groove (10) of the ball (3) and incorporating a drive lever (11) at the other end to actuate the rotation of the ball (3) through the rod (8).

In the assembled arrangement, the rod (8) is secured with leak-tight coupling to the body (1) of the faucet by means of a packing gland (12), while the lever (11) is secured on the rod (8) by means of a retaining nut (13).

The ball (3) has a conduit (14) extending from a side area to the middle area, from where there is arranged in continuation another conduit (15) opening perpendicularly downwards.

Furthermore, another conduit (16) of a smaller diameter opens perpendicularly from one side to the conduit (14), in which a bushing (17) determining the passage diameter through said conduit (16) is arranged, such that said bushing (17) can be replaced for determining different passage diameters in the mentioned conduit (16). According to a preferred embodiment, the bushing (17) is envisaged to be made of Teflon, but making said bushing (17) from any other material does not alter the concept of the invention.

With that arrangement, the lower conduit (15) of the ball (3) communicates with the lower conduit (6) of the body (1) of the faucet and, depending on the angular position of the ball (3), according to the rotational actuation thereof by the lever (11), the conduit (14) or the conduit (16) are communicated with the conduit of the tubular bushing (5), or the blind portion opposite any of said conduits (14 or 16) is facing said conduit of the tubular bushing (5), said positions being determined with partial rotations of the ball (3) to 90°.

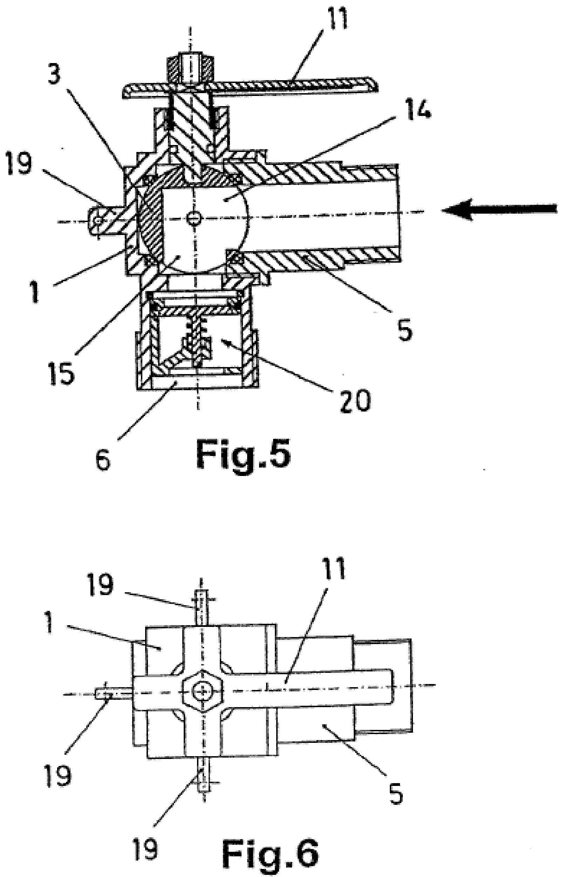

Therefore, by connecting the tubular bushing (5) to the portion where the flow arrives from a water supply pipe and the conduit (6) to the portion of the pipe going to the supply of application, the faucet allows establishing an open passage position, as shown in Figures 5 and 6, the ball (3) being located with the conduit (14) facing the conduit of the tubular bushing (5), such that the flow reaching the faucet completely passes through the ball (3), entering through the tubular bushing (5) and exiting through the conduit (6).

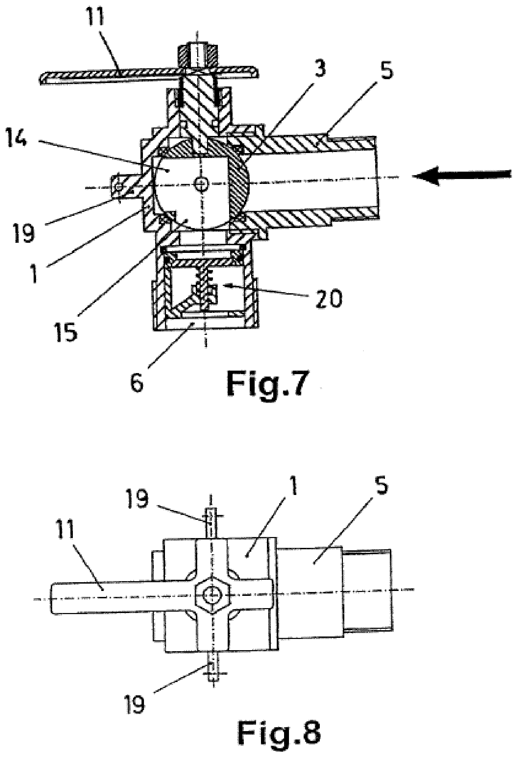

By means of rotating the ball (3) 180° with respect to the preceding position, a closed passage position is determined, as shown in Figures 7 and 8, in which the flow reaching through the tubular bushing (5) is completely cut off by the ball (3), such that no flow whatsoever passes to the conduit (6).

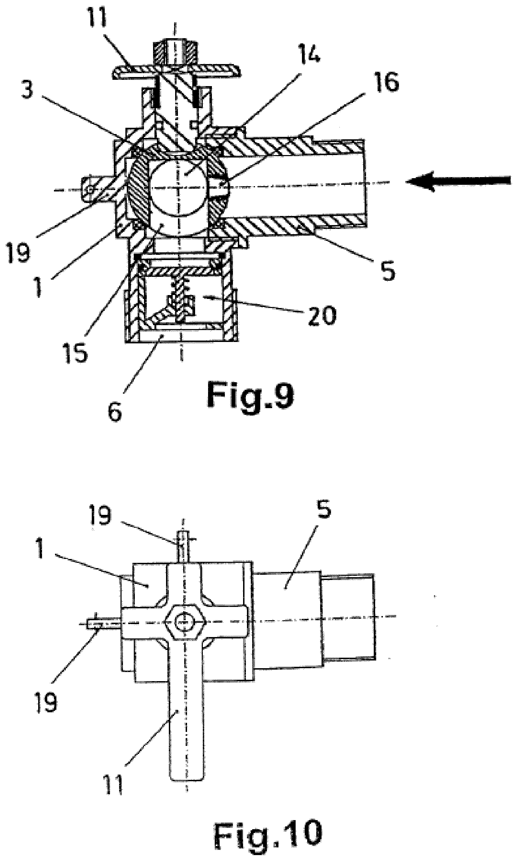

By means of rotating the ball (3) 90° from any of the preceding positions to one side, a position of reduced flow circulation through the faucet is in turn determined, as shown in Figures 9 and 10, the conduit (16) of a smaller diameter facing the conduit of the tubular bushing (5), such that the flow reaching the faucet through the tubular bushing (5) only partially passes through the ball (3) to exit through the conduit (6), which allows establishing a restricted supply when the supply must comply with certain limitations to the flow that is provided to users.

A strip (18) intended for establishing a sealed retention of the faucet in any of the functional positions is incorporated associated with the drive lever (11) for driving the rotation of the ball (3) by means of the rod (8), pins (19) provided with a hole, to which the end of the strip (18) can be selectively fitted and held with a sealing bead to immobilize the faucet in the desired functional position is envisaged in the body (1) of the faucet.

A check valve (20) is arranged in the outlet conduit (6) of the faucet, said valve being formed by a plunger (21) which is axially guided with respect to a support body (22) and is pushed by a spring (23) to a seal seat in which a gasket (24) is arranged, said check valve (20) determining a one-way flow circulation through the faucet.

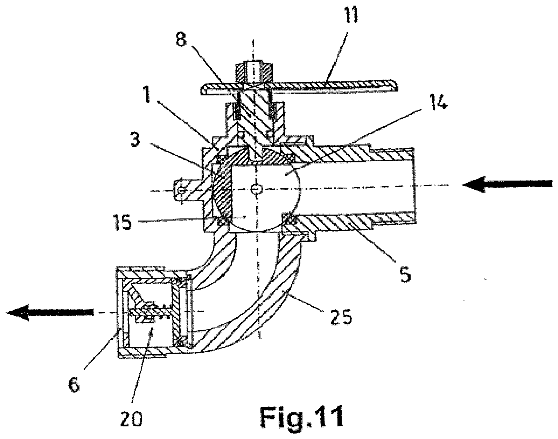

In the structural embodiment, the faucet can be configured in any shape to best adapt to its intended applications, without it altering the functional concepts making up the object of the invention in relation to the possibility of selecting an open passage position, a closed passage position and a reduced passage position, for the applications of use. In that sense, the body (1) of the faucet can have a bent prolongation (25) in the lower portion, for example, so that the outlet conduit (6) projects in a horizontal direction, as depicted in Figure 11.

## Claims

1. A three-position faucet for water supply systems, formed by a body (1) housing a ball (3) arranged in a leak-tight assembly and with rotational capability for establishing positions for opening and closing the passage through the faucet between an inlet conduit and an outlet conduit, wherein the ball (3) has a total of three conduits consisting of:
a first conduit (14),
a second, lower conduit (15), and
a third, other conduit (16) of a smaller diameter,
the first conduit (14) extending from a side area to the middle area, from where there is arranged in continuation the second conduit (15) opening perpendicularly downwards, the second, lower conduit (15) facing an outlet conduit (6) defined by the body (1) of the faucet,
whereas depending on the rotation of the ball (3), the first conduit (14), the third conduit (16), or a blind portion can be arranged facing an inlet conduit defined by a tubular bushing (5) coupled to the body (1), for establishing an open passage position, a reduced passage position, or a closed passage position, through the faucet, respectively, **characterized in that** the third conduit (16) of a smaller diameter opens perpendicularly from one side to the first conduit (14), **in that** the blind portion is opposite any of the first conduit (14) and the third conduit (16), and **in that** a bushing (17) which can be replaced for determining different passage diameters in the third conduit (16) is arranged in the third conduit (16).

2. The three-position faucet for water supply systems according claim 1, **characterized in that** the functional open passage, reduced passage and closed passage positions are determined by means of successive rotations of the ball (3) in its assembly housing.

3. The three-position faucet for water supply systems according claim 1, **characterized in that** a rod (8) incorporating a drive lever (11) for driving the rotation is arranged coupled to the ball (3), a strip (18) that can be fitted into the pins (19) of the body (1) being linked to said lever (11) to assure that all the functional positions of the faucet are sealed.

4. The three-position faucet for water supply systems according claim 1, **characterized in that** a check valve (20) determining a one-way flow circulation through the faucet is arranged in the outlet conduit (6).

## Patentansprüche

1. Dreistellungshahn für Wasserversorgungssysteme, der von einem Körper (1) gebildet wird, der eine Kugel (3) unterbringt, die in einer leckdichten Anordnung und mit Drehfähigkeit zum Erzeugen von Stellungen zum Öffnen und Schließen des Durchgangs durch den Hahn zwischen einem Einlasskanal und einem Auslasskanal angeordnet ist, wobei die Kugel (3) insgesamt drei Kanäle aufweist, die aus Folgendem bestehen:
einem ersten Kanal (14),
einem zweiten, unteren Kanal (15), und
einem dritten, anderen Kanal (16) von kleinerem Durchmesser,
wobei sich der erste Kanal (14) von einem Seitenbereich zum Mittenbereich erstreckt, worauf folgend der zweite Kanal (15) angeordnet ist, der senkrecht nach unten hin öffnet, wobei der zweite, untere Kanal (15) zu einem Auslasskanal (6) weist, der durch den Körper (1) des Hahns definiert wird,
während je nach Drehung der Kugel (3) der erste Kanal (14), der dritte Kanal (16) oder ein Blindteil angeordnet sein können, die zu einem Einlasskanal weisen, der durch eine rohrförmige Einfassung (5) definiert wird, die mit dem Körper (1) gekoppelt ist, um eine offene Durchgangsstellung, eine reduzierte Durchgangsstellung bzw. eine geschlossene Durchgangsstellung durch den Hahn herzustellen,
**dadurch gekennzeichnet, dass** der dritte Kanal (16) von kleinerem Durchmesser senkrecht von einer Seite des ersten Kanals (14) öffnet, dadurch, dass das Blindteil gegenüber eines beliebigen von erstem Kanal (14) und drittem Kanal (16) angeordnet ist, und dadurch, dass eine Einfassung (17), die zum Festlegen unterschiedlicher Durchgangsdurchmesser im dritten Kanal (16) ausgewechselt werden kann, im dritten Kanal (16) angeordnet ist.

2. Dreistellungshahn für Wasserversorgungssysteme nach Anspruch 1, **dadurch gekennzeichnet, dass** die funktionale offene Durchgangs-, die reduzierte Durchgangs- und geschlossene Durchgangsstellung mittels aufeinanderfolgender Drehungen der Kugel (3) in ihrem Anordnungsgehäuse festgelegt werden.

3. Dreistellungshahn für Wasserversorgungssysteme nach Anspruch 1, **dadurch gekennzeichnet, dass** eine Stange (8), die einen Antriebshebel (11) zum Antreiben der Drehung aufnimmt, mit der Kugel (3) gekoppelt angeordnet ist, wobei ein Streifen, der (18) in die Stifte (19) des Körpers (1) eingesetzt werden kann, mit dem Hebel (11) verbunden ist, um sicherzustellen, dass alle Funktionsstellungen des Hahns abgedichtet sind.

4. Dreistellungshahn für Wasserversorgungssysteme nach Anspruch 1, **dadurch gekennzeichnet, dass** ein Rückschlagventil (20), das einen Einwegdurchlauf durch den Wasserhahn festlegt, in dem Auslasskanal (6) angeordnet ist.

## Revendications

1. Robinet à trois positions pour des systèmes d'alimentation en eau, formé par un corps (1) logeant un boisseau sphérique (3) agencé dans un ensemble étanche aux fuites et avec une capacité de rotation pour établir des positions pour ouvrir et fermer le passage par le robinet entre un conduit d'entrée et un conduit de sortie, dans lequel le boisseau sphérique (3) présente un total de trois conduits constitués de :
un premier conduit (14),
un deuxième conduit inférieur (15) et
un troisième autre conduit (16) d'un diamètre plus petit,
le premier conduit (14) s'étendant d'une zone latérale à la zone médiane, d'où est agencé en continuité le deuxième conduit (15) s'ouvrant perpendiculairement vers le bas, le deuxième conduit inférieur (15) étant face à un conduit de sortie (6) défini par le corps (1) du robinet,
alors qu'en fonction de la rotation du boisseau sphérique (3), le premier conduit (14), le troisième conduit (16) ou une partie borgne peut être agencé face à un conduit d'entrée défini par une bague tubulaire (5) couplée au corps (1), pour établir une position de passage ouvert, une position de passage réduit ou une position de passage fermé, par le robinet respectivement,
**caractérisé en ce que** le troisième conduit (16) d'un diamètre plus petit s'ouvre perpendiculairement d'un côté au premier conduit (14), **en ce que** la partie borgne est opposée à l'un quelconque du premier conduit (14) et du troisième conduit (16), et **en ce que**
une bague (17), qui peut être remplacée pour déterminer différents diamètres de passage dans le troisième conduit (16), est agencée dans le troisième conduit (16).

2. Robinet à trois positions pour des systèmes d'alimentation en eau selon la revendication 1, **caractérisé en ce que** les positions de passage ouvert fonctionnel, de passage réduit et de passage fermé sont déterminées à l'aide de rotations successives du boisseau sphérique (3) dans son logement d'ensemble.

3. Robinet à trois positions pour des systèmes d'alimentation en eau selon la revendication 1, **caractérisé en ce qu'**une tige (8) incorporant un levier d'entraînement (11) pour l'entraînement de la rotation est agencée couplée au boisseau sphérique (3), une bande (18) qui peut être insérée dans les broches (19) du corps (1) étant liée audit levier (11) pour s'assurer que toutes les positions fonctionnelles du robinet sont étanches.

4. Robinet à trois positions pour des systèmes d'alimentation en eau selon la revendication 1, **caractérisé en ce qu'**un clapet antiretour (20) déterminant une circulation de flux à une voie à travers le robinet est agencé dans le conduit de sortie (6).
